# DEMANDE DE BREVET EUROPEEN

(11) **EP 0 568 518 A1**
(43) Date de publication de la demande: **03.11.1993**
(21) Numéro de dépôt: 93870072.1
(22) Date de dépôt: 27.04.1993
(51) Int. Cl.: G01S 13/56

(54) **Procédé et système de détection**

(30) Priorité: 29.04.1992 BE 9200395
(71) Demandeur: ICOMS SPRL, B-1348 Louvain-La-Neuve (BE)
(72) Inventeur:
(74) Mandataire: Overath, Philippe

(57) **Abrégé**

L'invention propose une méthode et un système de détection d'un objet en mouvement relatif à un autre objet.

L'objet pouvant être une personne, un élément, une installation, un outil, une surface...

Suivant l'invention , on génère une onde hyperfréquence dans une antenne à fentes et on dirige les rayons s'échappant des fentes sur la zone à surveiller.

On détecte les ondes réfléchies et on compare cette fréquence avec la fréquence des ondes émises.

## Description

La présente invention se rapporte au domaine de la détection d'un objet en mouvement relatif à un autre objet, et dont chaque objet peut être une personne, un élément, une surface, une installation, une machine, un outil, etc...

En particulier l'invention se rapporte à la détection d'un danger pouvant provenir d'un objet, d'une personne, d'une machine, d'un outil, d'une installation, d'une surface etc...

Il est connu de détecter des objets par plusieurs systèmes.

La détection par barrière lumineuse, telle qu'appliquée dans des ascenseurs ou portes coulissantes est bien connue. La surface protégée par cette barrière est toutefois très réduite et la main d'une personne par exemple ou la fourche d'un chariot risque de ne pas être vus..

Un autre système de détection est basé sur l'utilisation d'un signal infra-rouge actif ou passif. Les rayons infra-rouges sont toutefois perturbés par la chaleur et la couleur de l'environnement.

Un autre système encore utilise un radar à hyperfréquence couplé à une antenne à cornet. Ce système ne permet pas de surveiller une surface importante étant donné la forme conique du cornet. Il faut donc placer plusieurs radars en série, ce qui donne lieu à un équipement onéreux ainsi qu'à des zones d'ombres, c'est-à-dire des zones non protégées. Ce système a en plus l'inconvénient qu'il ne permet pas de rejeter le trafic parallèle. En effet, le lobe d'ondes formé par un radar avec antenne à cornet a une forme pyramidale, ce qui ne permet pas de distinguer une cible qui se dirige parallèlement à la surface à protéger d'une cible qui se dirige vers cette surface.

La présente invention a pour objet de proposer un procédé et un système de détection qui élimine les inconvénients des systèmes connus. En particulier l'invention propose un procédé et un système qui détecte une personne ou un objet qui se dirige vers la zone protégée sans détecter le trafic parallèle.

Il a été trouvé que cet objectif peut être atteint en utilisant un générateur d'ondes hyperfréquences couplé à une antenne à fentes.

Une antenne à fentes consiste à une série de fentes taillées dans un guide d'ondes suivant des principes connus et est décrit dans les ouvrages spécialisés traitant l'utilisation des antennes dans l'hyperfréquence.

Une antenne à fentes, bien que décrit dans la litérature, n'est que très rarement utilisée jusqu'à présent et trouve ses applications dans le domaine de guidage pour engins militaires et spaciales. Dans ce cas, une série d'antennes à fentes est généralement couplé pour pouvoir fonctionner correctement.

Or, il a été trouvé qu'une antenne à fentes bénéficie de la qualité de pouvoir distinguer un trafic qui se dirige vers la surface protégée d'un trafic parallèle à cette surface.

Lorsqu'on génère un signal hyperfréquence dans une antenne à fentes, ce signal donne lieu à un lobe de rayonnement multidirectionnel dans le sens transversal par rapport au guide d'ondes. L'ouverture du lobe est toutefois relativement large (environ 70 à 80° à-3 db).

Etant donné que les ondes se dirigent dans toutes les directions, les signaux détectés pourraient pour certaines applications comporter trop de parasites et ne pas donner une détection précise. Au cas où le rayonnement multidirectionnel constituerait un inconvénient pour une détection précise en utilisant une antenne à fentes, on propose suivant une application avantageuse de l'invention de diriger les ondes et d'orienter le lobe de rayonnement sur la surface à contrôler et de limiter ainsi les signaux détectés aux signaux recherchés.

Suivant cette application avantageuse on ajoute un où plusieurs réflecteurs latéraux à l'antenne à fentes ce qui permet de modifier à volonté les caractéristiques de directions et de rayonnement de l'antenne. En pratique, l'utilisation d'un réflecteur concentre le lobe de rayonnement et augmente de ce fait la sensibilité, le lobe de rayonnement devient une portion de cylindre, en quartier de tarte comme illustré ci-après.

Les réflecteurs utilisés seront de préférence planes mais peuvent également avoir une forme hyperboliques où paraboliques si les caractéristiques de rayonnement le permettent.

Il est clair que la longueur des réflecteurs et leur écartement déterminent les caractéristiques de l'antenne selon l'invention.

Les réflecteurs peuvent être fixes ou mobiles par exemple, pivotants ou téléscopiques.

Les réflecteurs peuvent également être symétriques ou asymétriques.

Afin de permettre la détection recherchée, l'antenne à fentes éventuellement pourvue de un ou plusieurs réflecteurs et d'un générateur d'ondes hyperfréquentes sera complétée par un détecteur et un circuit de traitement de données ainsi que d'un système d'alarme et/ou d'intervention.

L'invention sera décrite ci-après plus en détail à l'aide de plusieurs modes de mise en application en se référant aux figures jointes qui représentent :
- les fig.1a et 1b des vues en perspectives d'une partie d'un guide d'ondes d'une antenne à fentes
- la fig.2a une vue en perspective d'un guide d'ondes avec deux réflecteurs
- la fig.2b une vue en perspective du lobe de rayonnement d'une antenne à fentes avec réflecteurs
- les fig.3 des schémas montrant des coupes dans plusieurs modes de mise en application d'un réflecteur
- les fig.4a et 4b des schémas donnant une vue en plan et en coupe d'une premiére application
- la fig.5 un schéma-bloc d'un circuit électronique utilisé dans le cadre de l'application selon la fig.4
- les fig.6a et 6b deux diagrammes illustrant l'application selon la fig.4
- les fig.7a et 7b des schémas donnant une vue en plan et en coupe d'une deuxième application
- la fig.8 un schéma donnant une vue en plan et en coupe d'une troisième application
- la fig.9 un schéma donnant une vue en plan d'une quatriéme application
- la fig.10 un schéma-bloc d'un circuit électronique utilisé dans le cadre de l'application suivant la fig.9.

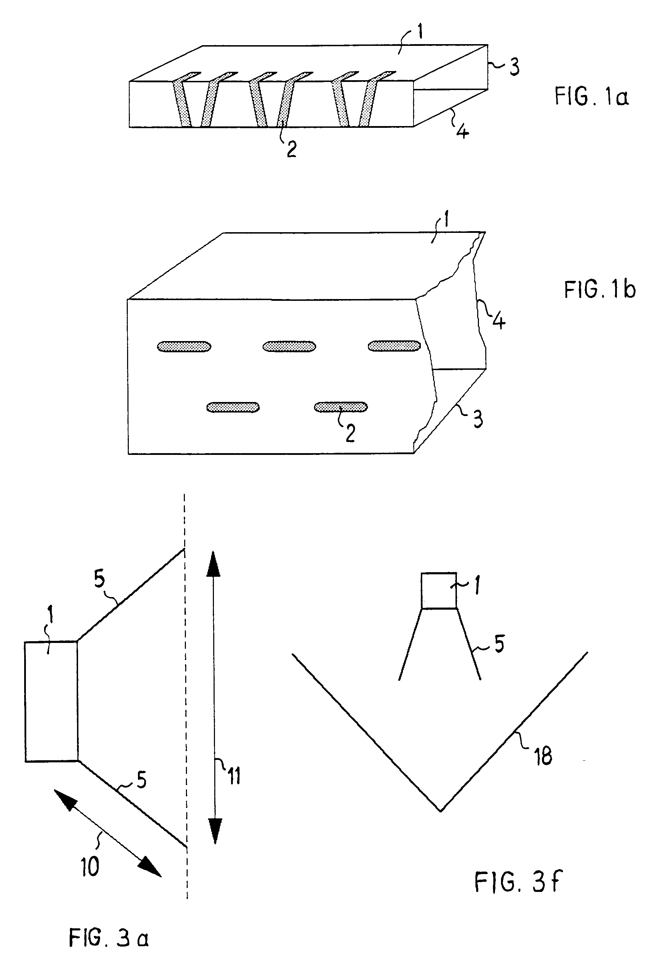

Les figures 1 montrent des vues en perspectives d'une partie d'un guide d'ondes 1 d'une antenne à fentes. Dans la fig la les fentes 2 sont taillées dans le petit côté 3 du guide d'ondes 1 de section rectangulaire. Dans la fig lb les fentes 2 sont taillées dans le grand côté 4 du guide d'ondes 1 de section rectangulaire. Le guide d'ondes peut avoir une forme rectiligne, une forme courbée, une forme pliée ou toute forme nécessaire, toutefois pour le guidage des ondes la section d'un guide d'ondes sera de préférence, mais pas nécessairement, rectangulaire.

La figure 2a montre un guide d'ondes 1 pourvue de deux réflecteurs 5, et d'un générateur d'ondes hyperfréquences 6.

La figure 2b montre une antenne à fentes, comprenant le générateur d'ondes hyperfréquences 6, le guide d'ondes 1, deux réflecteurs 5 ainsi que le lobe de rayonnement 7. Cette figure 2b montre que le lobe de rayonnement est une portion de cylindre (cylindre dont la génératrice est la droite 8 et la directrice est le cercle forme par la courbe 9). La portion du cylindre se présente comme un quartier de tarte. Ce lobe de rayonnement 7 couvre intégralement - sans zone morte - l'espace de détection délimitée par les réflecteurs 5.

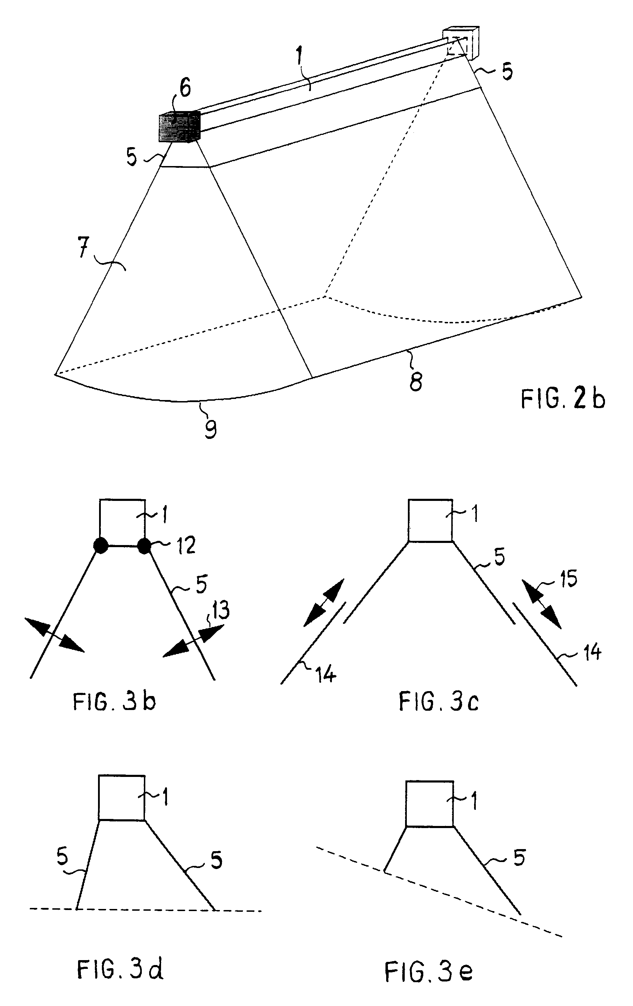

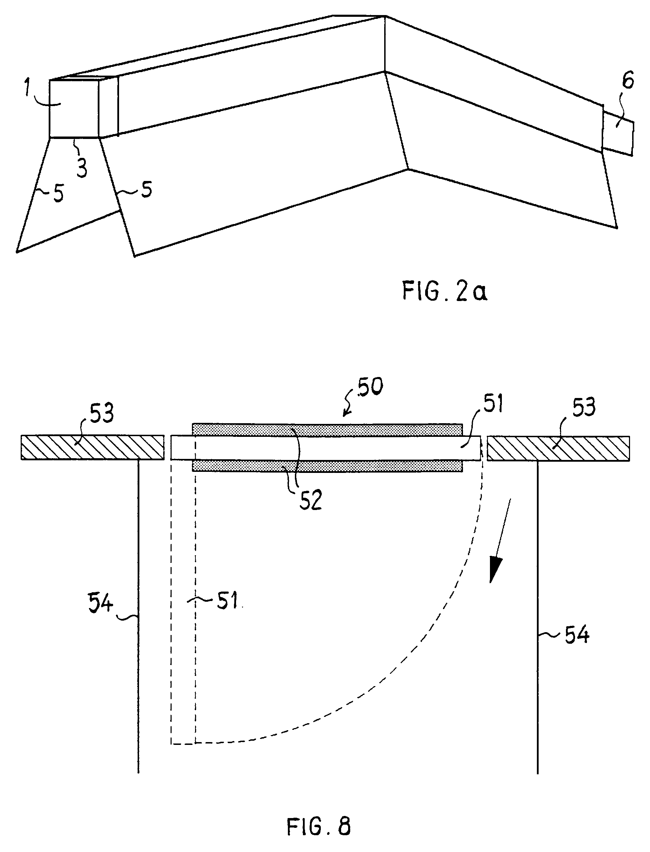

Les figures 3 montrent plusieurs types de réflecteurs.

La fig.3 a représente une coupe transversale d'un guide d'onde 1 avec deux réflecteurs planes 5. Les flèches 10 et 11 indiquent respectivement la longueur des réflecteurs et l'écartement des réflecteurs . La longueur et l'écartement des réflecteurs déterminent les caractéristiques de l'antenne. Il est à noter aussi que l'utilisation de réflecteurs augmente la sensibilité de l'antenne et/ou réduisent la puissance nécessaire. En effet, plus petit est l'écartement 11, plus fort est le rayonnement et vice-versa.

La fig 3b montre une application de réflecteurs 5 pouvant pivoter autour des axes 12, les flèches 13 indiquent le mouvement des réflecteurs. Ce type de réflecteurs peut être utile au cas où la zone à surveiller n'est pas toujours la même.

La fig 3c montre des réflecteurs 5 téléscopiques. On peut considérer que chaque réflecteur comporte une partie fixe 5 et une partie mobile 14 attaché à la partie fixe par l'intermédiaire d'un système de guidage (non illustré). Ce système peut être de toute nature, tel en queue d'aronde, en encoche, à ressort etc...

La partie mobile 14 peut se déplacer dans la direction des flèches 15 par rapport à la partie fixe 5; ce déplacement peut se faire par pas où d'une manière continue.

Les fig 3d et 3e montrent des réflecteurs pour lobes de rayonnement asymétriques. Suivant la fig 3d l'angle formé par les deux réflecteurs 5 avec le guide d'ondes 1 est différente, dans la fig 3e les réflecteurs 5 ont chacun une longueur différente.

On peut d'avantage augmenter la directivité des ondes en utilisant un cornet replié et ceci sans augmenter l'encombrement total. La fig.3 montre une antenne à fentes 1 avec réflecteurs 5 couplés à un réflecteur complémentaire 18.

Plusieurs autres types de réflecteurs peuvent être utilisés dans le cadre de l'invention, il peuvent être hyperboliques, paraboliques, plane avec partie hyperbolique ou parabolique etc...

Sur les dessins on a représenté pour la simplicité chaque fois deux réflecteurs, il est clair que pour de nombreuses applications un seul réflecteur peut suffire. Dans d'autres cas il pourra être avantageux d'utiliser trois ou plusieurs réflecteurs.

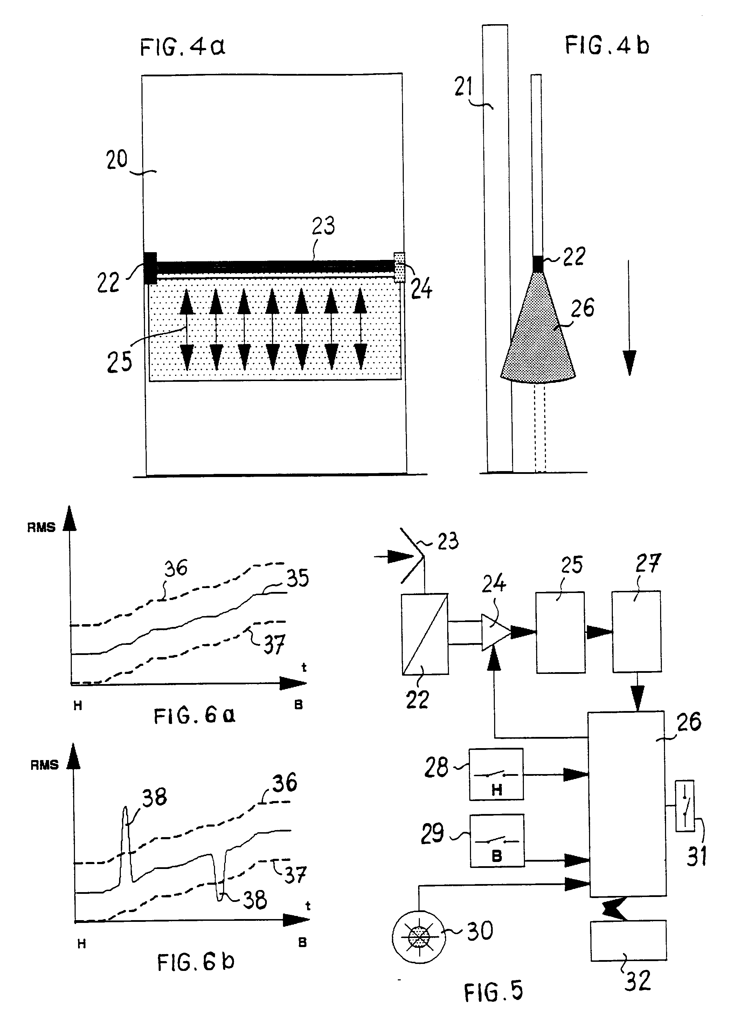

La figure 4 montre l'application d'une antenne à fentes utilisée pour la surveillance d'une porte sectionnelle. Ce type de porte est constitué généralement par plusieurs battants reliés entre eux par des articulations et se déplace dans le sens vertical. Le fonctionnement de ce type de porte s'accompagne avec un système qui arrête la porte lorsqu'un objet ou une personne est détecté sur son chemin.

Les systèmes utilisés jusqu'à ce jour sont basés sur le barrage infra-rouge et/ou sur un système de barres palpeuses, agissant par contact.

Une antenne à fentes suivant l'invention pourra favorablement remplacer les systèmes existants.

La figure 4a montre une vue en plan de la porte 20 placée devant un mur extérieur 21. La figure 4b une coupe transversale.

La partie inférieure de la porte est équipée d'un système détecteur suivant l'invention comportant un émetteur-récepteur 22, une antenne à fentes 23 et une charge 24 qui accorde l'impédance caractéristique de l'antenne. Avantageusement l'antenne à fentes 23 peut être équipée de réflecteurs. Les flèches 25 montrent la direction du mouvement de la porte. Lorsque la porte descend, l'émetteur 22 génère un signal hyperfréquence qui est guidé via l'antenne à fentes et qui dirige son lobe de détection 26 vers le bas. La détection est basée sur l'effet Doppler.

La figure 5 montre le circuit électronique.

La cellule émetteur-récepteur 22 génère un signal hyperfréquence qui est rayonné dans l'espace grâce à l'antenne à fentes 23. Selon l'effet Doppler, toute personne ou tout objet en mouvement relatif sous le détecteur provoque une variation de la fréquence de l'onde incidente.

Cette onde réfléchie est captée par l'antenne 23 et mélangée dans l'émetteur-récepteur 22.

A la sortie de la cellule emetteur-récepteur 22, on aura un signal Doppler basse fréquence dont la fréquence est proportionnellement à la vitesse relative de l'objet détecté et l'amplitude est proportionnelle à la taille et à la proximité de l'objet détecté.

Le signal Doppler est appliqué à un ampli à gain programmable 24. Pour éviter la saturation, on diminue le gain de l'ampli au fur et à mesure que la porte s'approche du sol. On calcule ensuite la valeur efficace du signal Doppler grâce au circuit RMS (25) qui calcule la valeur efficace.

Avant d'arriver au microprocesseur 26, la valeur efficace du signale Doppler est convertie en un signal numérique grâce au convertisseur analogique digital 27. Les circuits 28 et 29 sont des contacts de fin de course haut et bas de la porte. Le chiffre de référence 30 représente un codeur qui donne la position relative ou absolue de la porte et 31 un relais de sortie ou tout autre interface de sortie. La référence 32 est une mémoire permanente pour la sauvegarde de la signature par exemple RAM non-volatile.

L'algorithme de détection selon l'invention est basé sur la reconnaissance de signature.

A l'installation de la porte, l'installateur fait descendre une fois la porte. Comme le détecteur est fixé sur la porte, il voit donc le sol et l'environnement aux alentours. Le système selon l'invention enregistre alors le signal (Fig.6a).

Le signal 35 constitue donc la signature de la porte et son environnement. Le microprocesseur calcule alors les gabarits de détection 36 et 37. La signature 35 et les gabarits de détection 36, 37 sont stockés dans la mémoire permanente. Le système est alors opérationnel.

A chaque descente de la porte, le système selon l'invention compare en permanence le signal Doppler mesuré en temps réel avec la signature stockée en mémoire. Si l'écart dépasse le gabarit de détection 36 ou 37 (fig.6b), le microprocesseur enclenche le relais de sortie 31, la porte remonte et le système est prêt pour une prochaine détection. Les pointes 38 (Fig.6b) montrent des obstacles détectés.

Les contacts de fin de course 28 et 29 permettent une synchronisation entre la signature et le signal mesuré en temps réel. Une meilleure précision est obtenue avec le codeur 30 incrémental ou absolu qui donne un signal de synchronisation.

Il est important de noter que le détecteur hyperfréquence utilisé n'est pas influencé par la nature, la couleur, et le pouvoir réfléchissant du sol. Il n'est pas sensible aux rayonnements lumineux, ni aux différences de luminosité entre partie extérieure et intérieure de la porte, ni aux courants d'air, ni aux bruits ambiants.

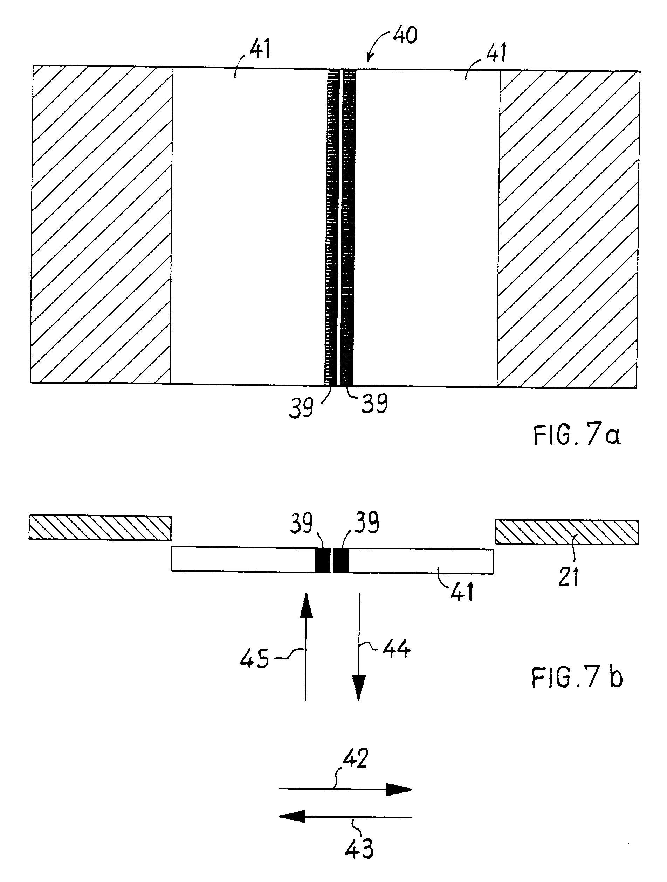

La fig 7 montre une vue en plan (7a) et une coupe transversale (7b) d'une porte coulissante 40.

La porte coulissante 40 est constitué par deux battants 41 qui se déplaçent horizontalement.

Suivant l'invention on assure la protection de la porte en installant sur chaque battant 41 un dispositif de protection 39 similaire à celui décrit dans l'exemple précédent c'est-à-dire un émetteur/récepteur et une antenne à fentes.

Le détecteur hyperfréquence à effet Doppler suivant l'invention permet de rejeter le trafic des personnes (ou engins) circulant parallèlement à la porte. A cet effet, on détecte le déphasage entre deux signaux.

Une cellule hyperfréquence à deux mélangeurs fournit deux signaux Doppler basse fréquence dont le déphasage entre ces deux signaux dépend du sens de déplacement de l'objet détecté. Avec un circuit électronique adapté, on pourrait donc savoir si un objet s'approche ou s'éloigne du détecteur et de là commander l'ouverture de la porte uniquement pour des personnes voulant entrer.

En conséquence, les personnes circulant parallèlement (fléches 42,43) à la porte et les personnes sortantes (flèches 44) ne donnent pas un bon déphasage et la porte reste fermée. Seul les personnes voulant entrer (flèches 45) créent un déphasage correct entre les deux signaux Doppler et de ce fait provoquent l'ouverture de la porte.

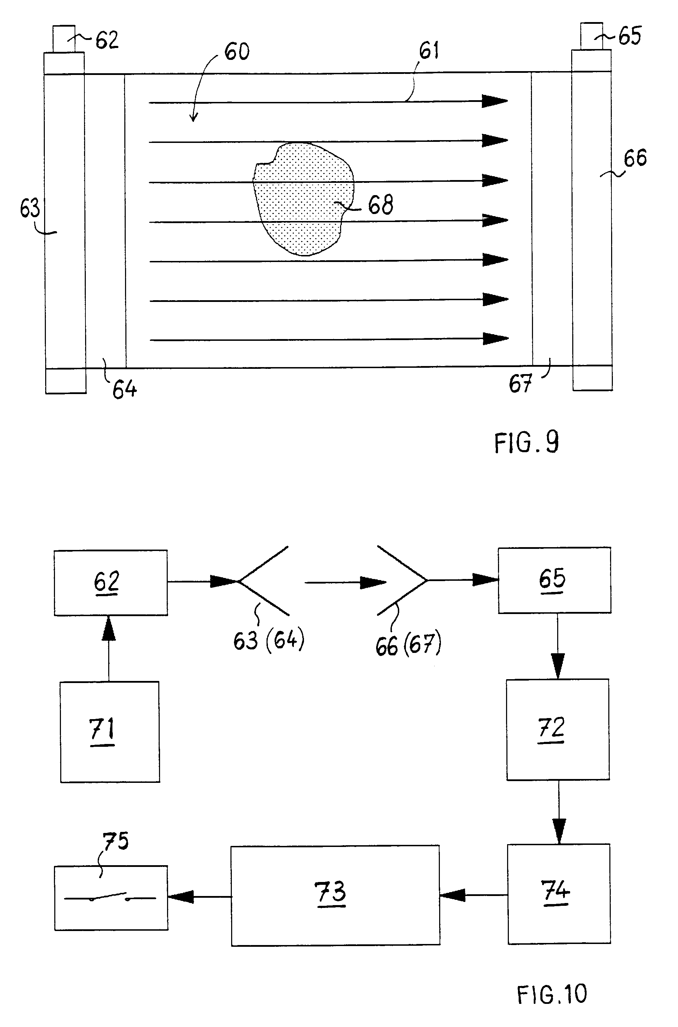

La fig 8 montre la méthode suivant l'invention appliquée à une porte pivotante 50, constituée par un battant 51 qui pivote autour d'un axe de rotation.

A cet effet, on installe de chaque côté du battant 51 un dispositif de protection 52 (antenne à fentes), de préférence munie de réflecteurs, similaire à celui décrit dans l'exemple de la porte sectionnelle.

L'association entre l'antenne à fentes et l'algorithme de détection basé sur la reconnaissance de signature permet de protéger la totalité de la surface couverte par le battant malgré la présence des murs 53 et des barrières 54.

La fig 9 montre encore une autre application du procédé et système suivant l'invention et concerne la protection d'un objet ou surface quelconque à l'aide d'un rideau immatériel obtenu par l'utilisation d'une antenne à fentes.

La figure montre le rideau 60 représenté par les flèches 61 et formé par un émetteur 62 d'ondes hyperfréquence guidées dans une antenne à fentes 63 pourvues de réflecteurs 64.

L'émetteur 62 est placé en face d'un récepteur 65 équipé également d'une antenne à fentes 66 avec réflecteurs 67. Le rideau comprend un circuit électronique de traitement qui procède à l'acquisition du signal généré par l'émetteur 62.

L'onde émise d'une manière homogène par l'antenne à fentes 63 constitue une sorte de rideau immatériel. Si un objet quelconque 68 se présente dans cette surface à protéger, le circuit électronique détecte cette présence et envoie un signal d'arrêt.

La figure 10 montre un schéma-bloc des différents éléments constituant le système complet.

L'émetteur 62 génère un signal hyperfréquence qui est rayonné dans l'espace grâce à l'antenne à fentes 63 avec réflecteurs 64. Ce signal hyperfréquence est modulé par le modulateur 71. La modulation peut se faire en amplitude, en fréquence, ou par toute autre méthode de modulation connue de l'homme de métier. Cette onde rayonnée est captée par l'antenne 66 du récepteur 65. Ce signal est ensuite démodulé par le démodulateur 72.

Avant d'envoyer vers le microprocesseur 73, le signal est converti en une valeur numérique grâce au convertisseur analogique-digital 74.

Le microprocesseur 73 enregistre cette valeur comme une valeur de référence et qui correspond à l'absence de tout objet dans la surface à protéger du système.

Si un objet se présente dans cette surface et provoque une variation du signal qui dépasse le gabarit de détection prédéterminé, le microprocesseur enclenche le relais de sortie 75 ou tout autre interface de sortie.

Cette application de protection peut être utilisée pour la sécurité des opérateurs d'une machine, pour la protection d'un outil, installation ou objet ou en général pour la détection et protection de tout événement dangereux ou de toute surface.

Il est important de noter que le rideau hyperfréquence utilisé n'est pas perturbé par la nature, la couleur, et le pouvoir réfléchissant du sol. Il n'est pas sensible aux rayonnements lumineux, ni aux courants d'air, ni aux bruits ambiants. Il est moins sensible à la pluie.

Plusieurs autres applications sont possibles, ainsi par exemple on peut utiliser le système pour la surveillance et le contrôle du trafic routier, on peut compter le nombre de voiture circulant dans un sens, on peut commander les feux de circulation et de là régler le trafic. On peut même en incorporant l'antenne à fentes dans le pare-choc d'une voiture appliquer la méthode comme système anti-collision. L'adjonction d'un modulateur/démodulateur permet la communication de données (identification, vitesse relative etc...) entre détecteurs de différents véhicules.

Le champ d'application de l'utilisation d'une antenne à fentes, de préférence avec réflecteurs peut également s'étendre aux systèmes d'accostage, aux systèmes d'approche, à la protection d'écluses, la protection de grandes machines, type rogneuses, grandes presses, laminoirs etc..., la protection du chemin de roulement de ponts roulants et en général à tout mouvement d'un objet, machine ou personne.

Il est clair que l'invention peut être appliquée avec ou sans réflecteurs. Lorsque toutefois le lobe de rayonnement de l'antenne à fentes est trop large pour la surface, l'objet ou la personne à surveiller on utilisera de préférence des réflecteurs.

## Revendications

1. Procédé de détection d'un objet en mouvement relatif à un autre objet et dont chaque objet peut être une personne, un élément, une surface, une installation, une machine, un outil etc... caractérisé en ce qu'on génère une onde hyperfréquence dans une antenne à fentes, qu'on dirige les rayons s'échappant des fentes vers la zone à surveiller à l'aide d'un ou plusieurs réflecteurs qu'on détecte la fréquence des ondes réfléchies résultant d'un objet en mouvement relatif dans la zone et qu'on compare cette fréquence avec la fréquence des ondes émises.

2. Procédé de détection, selon la revendication 1 caractérisé en ce qu'on mémorise les données de référence correspondantes à la fréquence des ondes émises dans une situation normale, qu'on compare la fréquence des ondes réfléchies et qu'on enclenche un signal si l'onde réfléchie ne correspond pas aux données de références.

3. Système de détection d'un objet en mouvement relatif à un autre objet et dont chaque objet peut être une personne, un élément, une surface, une installation, une machine, un outil etc... caractérisé en ce qu'il comprend :
- un émetteur d'ondes hyperfréquence (1)
- une antenne à fentes (2) comportant un ou plusieurs réflecteurs (5)
- un ou plusieurs récepteurs d'ondes réfléchies (22,65)
- un système de comparaison des données réfléchies (26 - 32, 73)
- un système d'intervention et/ou d'alarme (31, 75)

4. Système suivant la revendication 3 caractérisé en ce que le système comporte deux réflecteurs plats (5) limitant l'ouverture du lobe de rayonnement de l'antenne et dirigeant les ondes s'échappant des fentes vers une zone prédéterminée.

5. Système suivant la revendication 3, caractérisé en ce que le système de comparaison des données (26 - 73) compare les ondes réfléchies avec les données de référence, correspondantes à la fréquence des ondes émises dans une situation normale, stockées dans une mémoire.

6. Système de surveillance caractérisé en ce qu'il incorpore un système de détection suivant une ou plusieurs des revendications 3 à 5.

7. Système de surveillance suivant la revendication 6 caractérisé en ce qu'il est appliqué à la surveillance de portes automatiques (20 - 40 - 50).

8. Système de surveillance suivant la revendication 6 caractérisé en ce qu'il est appliqué à la surveillance des ponts roulants.

9. Système de surveillance suivant la revendication 6 caractérisé en ce qu'il est appliqué au trafic routier.
